(19) Europäisches Patentamt
European Patent Office
Office européen des brevets

(11) **EP 1 839 010 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*G01B 7/008* (2006.01)          *G01B 11/00* (2006.01)
*G01B 21/04* (2006.01)          *G01B 5/008* (2006.01)
*G05B 19/00* (2006.01)          *G05D 3/12* (2006.01)

(21) Anmeldenummer: 06700285.7

(22) Anmeldetag: **05.01.2006**

(86) Internationale Anmeldenummer:
**PCT/EP2006/000062**

(87) Internationale Veröffentlichungsnummer:
**WO 2006/077017 (27.07.2006 Gazette 2006/30)**

(54) **VERFAHREN ZUM BESTIMMEN EINER RAUMKOORDINATE EINES MESSPUNKTES AN EINEM MESSOBJEKT SOWIE ENTSPRECHENDES KOORDINATENMESSGERÄT**

METHOD FOR DETERMINING A SPACE COORDINATE OF A MEASURING POINT ON A TEST OBJECT AND CORRESPONDING COORDINATE MEASURING DEVICE

PROCEDE DE DETERMINATION D'UNE COORDONNEE SPATIALE D'UN POINT DE MESURE SUR UN OBJET DE MESURE ET INSTRUMENT DE MESURE DE COORDONNEES CORRESPONDANT

(84) Benannte Vertragsstaaten:
**DE IT**

(30) Priorität: **18.01.2005 DE 102005003322**

(43) Veröffentlichungstag der Anmeldung:
**03.10.2007 Patentblatt 2007/40**

(73) Patentinhaber: **Carl Zeiss Industrielle Messtechnik GmbH**
**73447 Oberkochen (DE)**

(72) Erfinder: **GRUPP, Günter**
**89558 Böhmenkirch (DE)**

(74) Vertreter: **Duhme, Torsten et al**
**Witte, Weller & Partner**
**Patentanwälte**
**Postfach 10 54 62**
**70047 Stuttgart (DE)**

(56) Entgegenhaltungen:
**EP-A- 0 241 883      US-A- 6 025 689**
**US-B1- 6 246 203**

## Beschreibung

Die vorliegende Erfindung betrifft ein Verfahren zum Bestimmen von zumindest einer Raumkoordinate eines Messpunktes an einem Messobjekt, mit den Schritten:

- Anfahren des Messpunktes mit einem Tastkopf, der an einer Verschiebemechanik angeordnet ist, die ein erstes und ein zweites parallel zueinander verfahrbares Auflager aufweist, wobei das erste Auflager mit einem ersten Antrieb und das zweite Auflager mit einem zweiten Antrieb angetrieben werden,

- Bestimmen einer ersten Verschiebeposition des ersten Auflagers und einer zweiten Verschiebeposition des zweiten Auflagers, und

- Bestimmen der Raumkoordinaten des Messpunktes unter Verwendung der ersten und der zweiten Verschiebeposition.

Die Erfindung betrifft ferner ein entsprechendes Koordinatenmessgerät, mit einem Tastkopf zum Anfahren des Messpunktes, wobei der Tastkopf an einer Verschiebemechanik angeordnet ist, die ein erstes und ein zweites parallel zueinander verfahrbares Auflager aufweist, mit einem ersten Antrieb zum Verfahren des ersten Auflagers und mit einem zweiten Antrieb zum Verfahren des zweiten Auflagers, mit einer ersten und einer zweiten Messeinrichtung zum Bestimmen einer ersten Verschiebeposition des ersten Auflagers und einer zweiten Verschiebeposition des zweiten Auflagers, und mit einer Berechnungseinheit zum Bestimmen der Raumkoordinate des Messpunktes unter Verwendung der ersten und zweiten Verschiebeposition.

Ein solches Verfahren und ein solches Koordinatenmessgerät sind aus US 6,829,838 B1 bekannt.

Ganz allgemein werden die Raumkoordinaten eines Messpunktes mit einem Koordinatenmessgerät bestimmt, indem der Messpunkt mit einem verfahrbaren Tastkopf des Koordinatenmessgerätes angefahren wird. Bei taktilen Koordinatenmessgeräten wird der Messpunkt mit einem Tastelement (in der Regel ein Taststift) angetastet. Die Stellung des Tastkopfes und gegebenenfalls die Auslenkung des Tastelements im Raum ermöglichen dann die Bestimmung der gewünschten Raumkoordinaten des Messpunktes. Vergleichbares gilt für Koordinatenmessgeräte mit optischen oder anderweitig berührungslos messenden Tastköpfen. Auch in diesem Fall wird der Tastkopf an den gewünschten Messpunkt herangefahren. Wie leicht einzusehen ist, hängt die Messgenauigkeit jeweils stark davon ab, wie genau die jeweilige Position des Tastkopfes beim Anfahren des Messpunktes bestimmt werden kann.

Messfehler können verschiedene Ursachen haben. Eine Fehlerursache sind fertigungstechnische Toleranzen in den Führungen des Koordinatenmessgerätes sowie elastische Verformungen des Koordinatenmessgerätes in Abhängigkeit davon, welche Schwerkraftmomente der Tastkopf in seiner jeweiligen Verfahrposition auf die Verschiebemechanik ausübt. Weitere Fehlerursachen können Positionsabweichungen des Tastkopfes sein, die sich aufgrund der und/oder bei den Verfahrbewegungen ergeben. Hierzu gehören beispielsweise Schwingungen, die beim Anfahren und Abbremsen des Tastkopfes auftreten können. Bei Koordinatenmessgeräten in Portal- oder Gantry-Bauweise (d.h. bei Koordinatenmessgeräten mit einer verfahrbaren Brücke auf zwei voneinander beabstandeten, parallel zueinander verfahrbaren Auflagern) können Messfehler auch infolge mangelnder Synchronität der Verfahrbewegungen der beiden Auflager auftreten. Wenn sich beispielsweise das linke Auflager in der Y-Achse um eine Distanz $\Delta Y$ weiterbewegt als das rechte Auflager, führt dies zu einer Rotation des Tastkopfes um eine zur Y-Achse orthogonale Achse (typischerweise Z-Achse). Die Folge sind Messfehler sowohl in Y-Richtung als auch in einer zweiten Orthogonalrichtung (typischerweise X-Achse).

Eine weitere Fehlerursache bei Koordinatenmessgeräten in Portal- oder Gantry-Bauweise können Verformungen sein, die dadurch entstehen, dass die zwei parallelen Auflager unter Zwang verfahren werden, d.h. dass die Antriebskräfte gegen die vorhandenen Linearführungen arbeiten. Darüber hinaus führt eine solche Situation auch zu einem erhöhten Verschleiß.

Es besteht daher bei Koordinatenmessgeräten mit zwei parallel zueinander verfahrbaren Auflagern der Wunsch, die beiden Auflager einerseits so synchron wie möglich zu bewegen und andererseits ein Arbeiten der Auflager gegen die Führungen zu vermeiden.

Aus US 6,025,689 ist ein Positionierungssystem für einen xy-Tisch bekannt, bei dem zwei separate Antriebe auf zwei separaten, parallelen Spindeln laufen. Eine gemeinsame Steuerung erzeugt für jeden Antrieb ein geeignetes Steuersignal und erhält Positions- und Geschwindigkeitsinformationen.

Des Weiteren ist es aus EP 0 241 883 A2 und aus US 6,246,203 B1 bekannt, einen Greifer an einer portal- oder brückenartigen Mechanik anzuordnen, wobei ein Querträger zwischen zwei parallelen Längsträgern verfahrbar ist, und wobei jedes Ende des Querträgers mit einem eigenen Antrieb angetrieben wird. Auch in diesen Fällen erzeugt eine Steuerung die Steuersignale für jeden Antrieb.

Vor diesem Hintergrund ist es eine Aufgabe der vorliegenden Erfindung, ein Verfahren der eingangs genannten Art anzugeben, mit dem sich eine möglichst synchrone und möglichst zwangsfreie Bewegung von zwei parallel zueinander verfahrbaren Auflagern erreichen lässt. Es ist ferner eine Aufgabe der vorliegenden Erfindung, ein entsprechendes Koordinatenmessgerät anzugeben. Außerdem sollen das neue Verfahren und das entsprechende Koordinatenmessgerät möglichst einfach und kostengünstig zu realisieren sein.

Diese Aufgaben werden gemäß einem Aspekt der Erfindung durch ein Verfahren der eingangs genannten Art gelöst, bei dem die beiden Antriebe mit einem gemeinsamen Regler angesteuert werden, der jedoch für jeden Antrieb einen eigenen Sollwert erzeugt, wobei eine Istdifferenz zwischen der ersten und zweiten Verschiebeposition bestimmt wird, wobei ein statischer Differenzwert bereitgestellt wird, der einen reproduzierbaren Differenzanteil zwischen der ersten und der zweiten Verschiebeposition repräsentiert, wobei der statische Differenzwert von der Istdifferenz subtrahiert wird, um einen dynamischen Differenzwert zu erhalten, und wobei der gemeinsame Regler einen Synchronregler beinhaltet, dem der dynamische Differenzwert als Eingangsgröße zugeführt wird.

Diese Aufgabe wird gemäß einem weiteren Aspekt der Erfindung durch ein Koordinatenmessgerät der eingangs genannten Art gelöst, das einen gemeinsamen Regler besitzt, mit dem die beiden Antriebe gemeinsam ansteuerbar sind, wobei der gemeinsame Regler für jeden Antrieb einen eigenen Sollwert erzeugt, indem ein gemeinsamer Regler, mit dem die beiden Antriebe gemeinsam ansteuerbar sind, wobei der gemeinsame Regler für jeden Antrieb einen eigenen Sollwert erzeugt, indem eine Istdifferenz zwischen der ersten und zweiten Verschiebeposition bestimmt wird, indem ein statischer Differenzwert bereitgestellt wird, der einen reproduzierbaren Differenzanteil zwischen der ersten und zweiten Verschiebeposition repräsentiert, indem der statische Differenzwert von der Istdifferenz subtrahiert wird um einen dynamischen Differenzwert zu erhalten, und indem der gemeinsame Regler einen Synchronregler beinhaltet, dem der dynamische Differenzwert als Eingangsgröße zugeführt ist.

Gemäß der vorliegenden Erfindung wird also ein gemeinsamer Regler verwendet, der die Sollwerte (entweder in digitaler Form oder als analoge Steuersignale) für die beiden Antriebe erzeugt. Mit anderen Worten erhält der gemeinsame Regler eingangsseitig einen Istwert oder ein Istsignal, der bzw. das für den kinematischen Zustand der beiden Antriebe gleichermaßen repräsentativ ist. Der gemeinsame Regler kann die beiden Antriebe damit grundsätzlich in gleicher Weise ansteuern. Infolgedessen entfallen Toleranzen, wie sie bei zwei vollständig getrennten Regelkreisen, nämlich einem für jeden Antrieb, auftreten können. Außerdem ermöglicht die Verwendung eines gemeinsamen Reglers eine sehr einfache und kostengünstige Realisierung mit relativ wenigen Bauteilen und einem geringen Aufwand für Einstell- und Abgleicharbeiten. Andererseits erzeugt der gemeinsame Regler jedoch für jeden der Antriebe einen eigenen Sollwert, so dass die beiden Antriebe trotz des grundsätzlichen Gleichlaufs mit geringen Unterschieden betrieben werden können. Auf diese Weise lassen sich die Verfahrbewegungen der beiden Auflager - innerhalb gewisser Grenzen - individuell steuern, um Toleranzen in den jeweiligen Führungen und zwischen den Antrieben auszugleichen.

Klassischerweise würden in vergleichbaren Situationen Regelungskonzepte eingesetzt, bei denen ein Antrieb als Master und der zweite Antrieb als Slave gesteuert wird. Der Slave-Antrieb würde dem Master-Antrieb innerhalb der erreichbaren Genauigkeit folgen. Ein solches Konzept erfordert jedoch zwei vollständige Regelkreise und es ist eine inhärente Eigenschaft, dass der Slave-Antrieb dem Master-Antrieb stets nachläuft. Die Synchronität der beiden Antriebe ist daher auf den Nachlauf des Slave-Antriebs begrenzt.

Im Gegensatz dazu zeichnet sich die vorliegende Erfindung dadurch aus, dass beide Antriebe gleichwertig angesteuert werden, d.h. keiner folgt dem anderen. Vielmehr wird durch das neue Regelungskonzept erreicht, dass die beiden Antriebe "wie ein einziger Antrieb" angesteuert werden, wobei der erfindungsgemäße Regler jedoch trotzdem in der Lage ist, individuelle Unterschiede zwischen den beiden Antriebswegen auszugleichen.

Die Bestimmung der Istdifferenz ist besonders vorteilhaft, wenn der Synchronregler einem gemeinsamen Lageregler nachgeordnet wird, welcher die grundsätzliche Positionierung der Auflager steuert. Dem Synchronregler obliegt es dann, die Bewegungen der beiden Auflager so synchron wie möglich zu steuern, indem die Istdifferenz zwischen den Verschiebepositionen ausgeglichen wird. Diese Ausgestaltung lässt sich besonders einfach und kostengünstig realisieren und sie ermöglicht vor allem sehr gute Ergebnisse in Bezug auf die Synchronität der beiden Antriebe.

Des weiteren wird ein statischer Differenzwert bereitgestellt, der eine statische Differenz zwischen der ersten und zweiten Verschiebeposition repräsentiert, der statische Differenzwert wird von der Istdifferenz subtrahiert, um einen dynamischen Differenzwert zu erhalten, und dem Synchronregler wird der dynamische Differenzwert als Eingangsgröße zugeführt.

Die Bestimmung des dynamischen Differenzwertes ist besonders vorteilhaft, wenn über die hier vorgeschlagene Regelung der beiden Antriebe hinaus auch noch eine rechnerische Korrektur bei der Bestimmung der Raumkoordinaten durchgeführt wird. Die Aufteilung der Istdifferenz in einen ersten (statischen) Differenzwertanteil und einen zweiten (dynamischen) Differenzwertanteil ermöglicht es nämlich, die rechnerische Korrektur unter Verwendung von an sich bekannten CAA-Verfahren (Computer Aided Accuracy), jedoch mit einer höheren Korrekturgenauigkeit durchzuführen. Die damit erreichbaren Verbesserungen in Bezug auf die Messgenauigkeit von Koordinatenmessgeräten der hier beschriebenen Art sind Gegenstand einer parallelen Patentanmeldung der vorliegenden Anmelderin, die zeitgleich zur hiesigen Anmeldung eingereicht wurde und auf die in dieser Hinsicht vollumfänglich Bezug genommen wird. Die vorteilhafte Korrektur der Messwerte unter Verwendung des dynamischen Differenzwert(anteils) ist außerdem in den Ausführungsbeispielen der vorliegenden Anmeldung beschrieben. Im Hinblick auf die vorliegende Erfindung eignet sich der dynamische Differenzwert hervorragend als Eingangsgröße, um Synchronitätsunterschiede zwischen den beiden Antrieben auszuregeln. Die Aufteilung der Istdifferenz in die beiden genannten Anteile besitzt zudem den Vorteil, dass die Synchronregelung auf die tatsächlich im Betrieb des Koordinatenmessgerätes auftretenden, wechselnden Verhältnisse optimiert werden kann. Ein Arbeiten der Antriebe gegen die Führungen eines (genau eingerichteten) Koordinatenmessgerätes wird dadurch besser vermieden. Beispielsweise würde ein statischer Anteil an der Istdifferenz, der durch Ablage eines Maßstabes verursacht wird, dazu führen, dass der Synchronregler die Antriebe gegen die Führungen arbeiten lässt. Ein solches Problem wird durch die vorliegende Ausgestaltung auf sehr effektive Weise vermieden.

Insgesamt ermöglicht der neue Ansatz eine recht einfache und kostengünstige Realisierung, die eine Bewegung der zueinander parallelen Auflager mit hoher Synchronität ermöglicht. Gleichzeitig lässt sich eine bewegung der Auflager gegen die jeweiligen Führungen vermeiden, da der gemeinsame Regler die individuellen Eigenschaften der beiden Antriebswege ausgleichen kann, indem er für jeden Antrieb einen eigenen Sollwert erzeugt.

Ein erfindungsgemäßes Koordinatenmessgerät lässt sich aufgrund des neuen Verfahrens mit hoher Genauigkeit und geringem Verschleiß betreiben. Dementsprechend werden Messfehler, die auf die Verformung des Koordinatenmessgerätes infolge mangelnder Synchronität und/oder infolge eines Verfahrens der Auflager gegen die Führungen entstehen, weitgehend reduziert.

Die genannte Aufgabe ist daher vollständig gelöst.

In einer Ausgestaltung der Erfindung beinhaltet der gemeinsame Regler einen gemeinsamen Lageregler, der einen für beide Antriebe gemeinsamen Sollwert erzeugt, sowie zumindest einen weiteren Regler, der aus dem gemeinsamen Sollwert einen individuellen Sollwert für jeden Antrieb erzeugt.

In dieser Ausgestaltung steuert der gemeinsame Regler die Verfahrbewegungen der beiden Auflager gewissermaßen entlang von einer fiktiven Bewegungsachse, die zwischen den jeweiligen Bewegungsachsen der beiden Antriebe liegt. Ein Positionssollwert wird von dem gemeinsamen Lageregler also entlang der fiktiven Bewegungsachse zwischen den beiden Antrieben angesteuert. Erst der zumindest eine weitere Regler sorgt unter Berücksichtigung der individuellen Eigenheiten jedes Antriebsweges dafür, dass die beiden Auflager individuell in eine Position entlang ihrer eigenen Bewegungsachsen gebracht werden, die so bemessen ist, dass die fiktive "Zwischenposition" dem Soll- bzw. Vorgabewert des gemeinsamen Lagereglers entspricht. Diese Ausgestaltung lässt sich besonders einfach und kostengünstig realisieren, da die gemeinsame Lageregelung mit einem einzigen Standard-lageregler für eine einzelne Bewegungsachse realisiert werden kann. Außerdem wird durch diese Ausgestaltung die Anzahl der notwendigen Abgleich- bzw. Einstellschritte bei der Inbetriebnahme deutlich reduziert.

In einer weiteren Ausgestaltung werden der erste und der zweite Antrieb abgeschaltet, wenn der dynamische Differenzwert einen definierten Schwellenwert überschreitet.

Durch diese Ausgestaltung lässt sich der Regelbereich des Synchronreglers auf einfache Weise auf "geringe" Abweichungen in den Bewegungen der beiden Antriebe reduzieren. Größere Abweichungen sollten demgegenüber durch eine erneute Ausrichtung des Koordinatenmessgerätes ausgeglichen werden. Die Ausgestaltung trägt in besonders vorteilhafter Weise dazu bei, ein Arbeiten der Antriebe gegen die Führungen und den damit verbundenen Verschleiß und Verformungen zu verhindern.

In einer weiteren Ausgestaltung wird die Raumkoordinate unter Verwendung des dynamischen Differenzwertes bestimmt.

Diese Ausgestaltung nimmt den bereits oben erwähnten Gedanken auf, den dynamischen Differenzwert nicht nur für die Steuerung der Antriebe, sondern auf für eine rechnerische Korrektur der aufgenommenen Messwerte bei der Bestimmung der Raumkoordinate zu verwenden. Diese Ausgestaltung führt auf besonders effiziente Weise zu sehr genauen Messwerten sowie zu einem verschleißarmen Betrieb des Koordinatenmessgerätes.

In einer weiteren Ausgestaltung wird die unter Verwendung des dynamischen Differenzwertes bestimmte Raumkoordinate anschließend unter Verwendung des statischen Differenzwertes korrigiert.

In dieser Ausgestaltung erfolgt also zunächst eine Korrektur der von den Messeinrichtungen erhaltenen Positionswerte anhand des dynamischen Differenzwertes und erst anschließend wird der bereits einmal korrigierte Positionswert unter Verwendung des statischen Differenzwertes noch mal korrigiert. Diese Ausgestaltung besitzt den Vorteil, dass die zweite Korrektur mit Hilfe von bekannten und etablierten CAA-Werkzeugen erfolgen kann, die in vielen Fällen bereits zur Korrektur von statischen Führungsfehlern (Korrektur von "Welligkeiten" in den Führungen etc.) verwendet werden.

In einer weiteren Ausgestaltung steuert der gemeinsame Regler den ersten und den zweiten Antrieb so an, dass sich in beiden Antrieben ein Antriebsstrom von etwa gleicher Höhe einstellt.

Diese Ausgestaltung ist besonders vorteilhaft beim Ausrichten des neuen Koordinatenmessgerätes. Sie trägt dazu bei, ein Arbeiten der Antriebe gegen die Führungen vor allem in den Fällen zu verhindern, in denen die Nullpunkte der getrennten Messeinrichtungen für die zwei Auflager einen Versatz aufweisen. Dies kann einerseits die Folge einer noch nicht optimalen Ausrichtung eines neuen Koordinatenmessgerätes sein. Andererseits können Nullpunktverschiebungen auch aufgrund von Temperatureinflüssen auftreten, weil sich beispielsweise getrennt voneinander angeordnete Maßstäbe an einem Koordinatenmessgerät unterschiedlich stark erwärmen. Die zusätzliche Berücksichtigung der Höhe der Antriebsströme verhindert, dass der gemeinsame Regler in einem solchen Fall von "verschobenen Messeinrichtungen" die Führungen des Koordinatenmessgerätes zu stark belastet. Darüber hinaus ist diese Ausgestaltung besonders vorteilhaft, um eine synchrone Bewegung der beiden Auflager über lange Zeiträume hinweg zu erreichen, insbesondere auch dann, wenn sich eine zunehmende statische Differenz zwischen den Verschiebepositionen der beiden Auflager infolge von Temperaturänderungen und/oder Verschleißerscheinungen einstellt.

In einer weiteren Ausgestaltung wird der Antriebsstrom für den ersten und den zweiten Antrieb auf einen definierten Maximalwert begrenzt, wobei der definierte Maximalwert vorzugsweise etwa gleich dem jeweils für eine Beschleunigung der Auflager benötigen Stromwert ist.

Mit diese Ausgestaltung wird sichergestellt, dass das neue Koordinatenmessgerät selbst bei einem Totalausfall des gemeinsamen Reglers nicht beschädigt wird. Mittelbar wird damit auch die hohe Genauigkeit des neuen Koordinatenmessgerätes sichergestellt.

In einer weiteren Ausgestaltung beinhaltet der gemeinsame Regler einen gemeinsamen Drehzahlregler für den ersten und den zweiten Antrieb, dem als Istdrehzahl ein mittlerer Drehzahlwert von dem ersten und zweiten Antrieb zugeführt wird.

Diese Ausgestaltung ermöglicht eine besonders einfache und effiziente Steuerung der beiden Auflager. Insbesondere führt diese Ausgestaltung dazu, dass die beiden Antriebe jeweils gleiche Vorschubkräfte erzeugen. Bei einer sehr starren Kopplung der beiden Auflager, wie dies häufig bei Koordinatenmessgeräten in Gantry-Bauweise der Fall ist, wird bereits hierdurch eine sehr hohe Synchronität erreicht.

In einer weiteren Ausgestaltung beinhaltet der gemeinsame Regler jeweils einen Stromregler für jeden Antrieb, wobei die Stromregler einen gemeinsamen Sollwert von dem gemeinsamen Drehzahlregler erhalten.

Diese Ausgestaltung ist besonders einfach und kostengünstig zu realisieren, und sie führt vor allem bei Koordinatenmessgeräten mit einer sehr starren Kopplung der beiden Auflager zu einer Steuerung ohne Zwangskräfte.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine vereinfachte Darstellung eines bevorzugten Ausführungsbeispiels für das neue Koordinatenmess- gerät,

Fig. 2    eine schematische Darstellung zur Erläuterung von Messfehlern, die bei ungleichem Vorschub der Portal- füße eines Koordinatenmessgerätes der in Fig. 1 ge- zeigten Art hervorgerufen werden,

Fig. 3    ein vereinfachtes Flussdiagramm, das die Bereitstel- lung des statischen Differenzwertes zeigt,

Fig. 4    ein vereinfachtes Flussdiagramm zur Erläuterung eines Ausführungsbeispiels des erfindungsgemäßen Verfahrens,

Fig. 5    ein Funktionsblockschaltbild eines bevorzugten Reg- lers für ein Koordinatenmessgerät der in Fig. 1 ge- zeigten Art,

Fig. 6    ein Funktionsblockschaltbild für einen Synchron- regler, der in dem Regler aus Fig. 5 Anwendung fin- det,

Fig. 7    eine Ergänzung des in Fig. 5 gezeigten Reglers, um auch im Langzeitbetrieb eine hohe Synchronität zu er- reichen, und

Fig. 8    ein weiteres bevorzugtes Ausführungsbeispiel für einen gemeinsamen Regler.

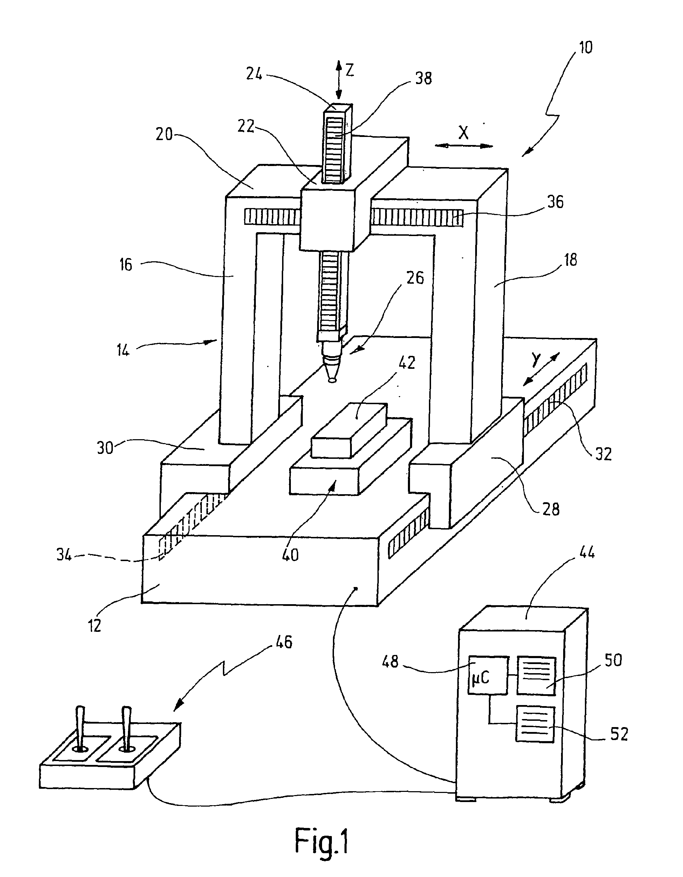

In Fig. 1 ist ein Ausführungsbeispiel des neuen Koordinatenmessgerätes in seiner Gesamtheit mit der Bezugsziffer 10 bezeichnet.

Das Koordinatenmessgerät 10 besitzt eine Basis 12, auf der ein Portal 14 in Längsrichtung (Y-Richtung) verschieblich angeordnet ist. Das Portal 14 hat zwei Portalfüße (allgemeiner: Auflager) 16, 18, die an ihren oberen Enden durch eine Brücke 20 verbunden sind. Auf der Brücke 20 sitzt ein Schlitten 22, der entlang der Brücke, also in einer die Portalfüße 16, 18 verbindenden Raumrichtung (X-Richtung), verschieblich ist. An dem Schlitten 22 ist eine Pinole 24 angeordnet, die in einer dritten Raumrichtung (Z-Richtung) senkrecht zur ersten und zweiten Raumrichtung verschieblich ist. Die drei genannten Raumrichtungen X, Y und Z stehen bevorzugt orthogonal zueinander, was für die vorliegende Erfindung jedoch nicht zwingend erforderlich ist.

Am unteren freien Ende der Pinole 24 ist ein Tastkopf 26 angeordnet, an dem ein nicht näher bezeichneter Taststift befestigt ist. Der Taststift dient in bekannter Weise zum Antasten eines Messobjekts. Die vorliegende Erfindung ist jedoch nicht auf taktile Koordinatenmessgeräte beschränkt und kann ebenso bei Koordinatenmessgeräten eingesetzt werden, bei denen ein Messpunkt berührungslos angefahren wird, beispielsweise also ein Koordinatenmessgerät mit optischem Tastkopf. Des weiteren ist die Erfindung nicht auf Koordinatenmessgeräte in der hier gezeigten Portalbauweise beschränkt. Sie kann gleichermaßen (und bevorzugt) bei Koordinatenmessgeräten in Gantry-Bauweise eingesetzt werden, bei denen nur die Brücke 20 mit zwei Auflagern entlang von zwei feststehenden, hochgelegten Schienen verfahrbar ist. Darüber hinaus kann die Erfindung generell bei allen Koordinatenmessgeräten eingesetzt werden, bei denen eine Verschiebung des Tastkopfes in zumindest einer Bewegungsrichtung mit Hilfe von zwei voneinander beabstandeten Antrieben erfolgt. Die Portalfüße 16, 18 besitzen in diesem Ausführungsbeispiel jeweils einen eigenen Antrieb 28, 30, der eine Bewegung des Portals in Y-Richtung ermöglicht.

An den Längsseiten der Basis 12 sind zwei Maßstäbe 32, 34 schematisch dargestellt, die sich parallel zur Y-Richtung erstrecken. In bevorzugten Ausführungsbeispielen handelt es sich um Glasmaßstäbe, mit denen die Y-Position der Portalfüße 16, 18 getrennt voneinander bestimmt wird. Die Maßstäbe 32, 34 sind somit Bestandteil von zwei Messeinrichtungen für die Y-Position des Tastkopfes 26. Es versteht sich, dass diese Messeinrichtungen außerdem noch geeignete Sensoren zum Ablesen der Maßstäbe 32, 34 beinhalten, die hier jedoch der Einfachheit halber nicht dargestellt sind. Darüber hinaus sei angemerkt, dass die Erfindung nicht auf die Verwendung von Glasmaßstäben beschränkt ist und auch mit anderen Messeinrichtungen zur Erfassung der Y-Position des Tastkopfes verwendet werden kann.

Ein weiterer Maßstab 36 ist parallel zur X-Richtung an der Brücke 20 angeordnet. Schließlich ist noch ein weiterer Maßstab 38 parallel zur Z-Richtung an der Pinole 24 angeordnet. Mit Hilfe der Maßstäbe 36, 38 lässt sich die aktuelle X-Position und Z-Position des Tastkopfes 26 in an sich bekannter Weise messtechnisch erfassen.

Bezugsziffer 40 bezeichnet ein Messobjekt, an dem die Raumkoordinaten eines Messpunktes 42 bestimmt werden sollen.

Mit der Bezugsziffer 44 ist eine Steuer- und Auswerteeinheit bezeichnet, die dazu ausgebildet ist, die Antriebe des Koordinatenmessgerätes 10 so anzusteuern, dass der Tastkopf 26 zu dem Messpunkt 42 verfahren wird. Für einen manuellen Betrieb kann die Steuereinheit 44 mit einem Bedienpult 46 verbunden sein. Es ist jedoch auch möglich, dass die Steuereinheit 44 Messpunkte 42 des Messobjekts 40 vollautomatisch anfährt und vermisst.

Die Steuereinheit 44 beinhaltet einen Prozessor 48 sowie mehrere Speicher, die hier vereinfacht bei den Bezugsziffern 50 und 52 dargestellt sind. Im Speicher 50 ist ein Computerprogramm abgespeichert, mit dessen Hilfe das nachfolgend erläuterte, Verfahren durchgeführt werden kann. Im Speicher 52 sind statische Differenzwerte dauerhaft abgespeichert, die gemäß einem Ausführungsbeispiel des erfindungsgemäßen Verfahrens in einer Kalibrierungsfahrt ermittelt wurden.

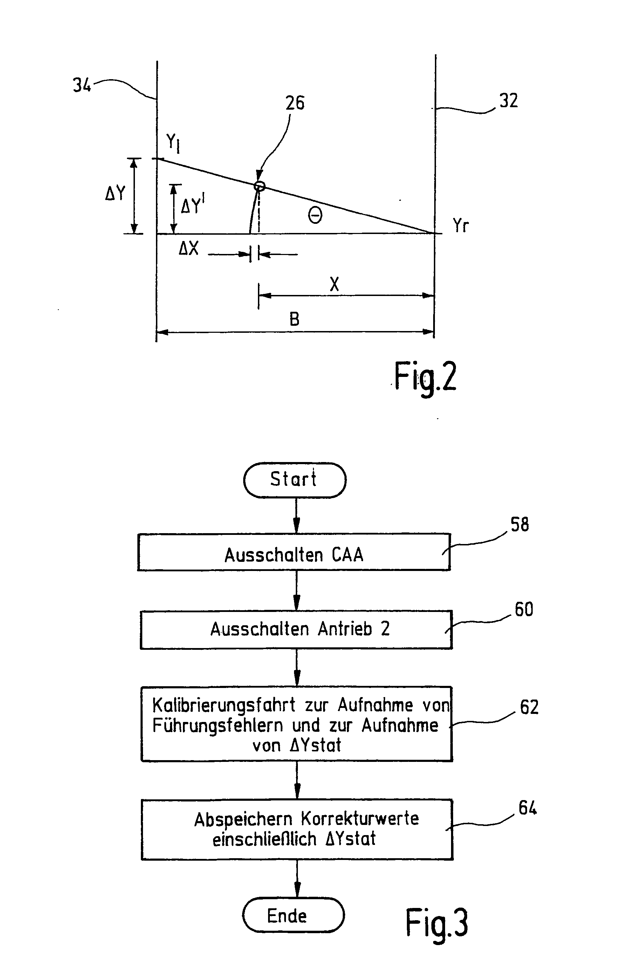

Fig. 2 zeigt eine vereinfachte geometrische Darstellung mit den beiden Maßstäben 32, 34 für die Bestimmung der Y-Position des Tastkopfes 26. Angenommen sei dabei, dass sich der Tastkopf 26 an der mit einem Kreis bezeichneten Position befindet. Diese Position resultiert aus einer Verschiebung des Tastkopfes 26 in X-Richtung um den Betrag X, gemessen vom rechten äußeren Ende des Maßstabes 36, sowie einer Verschiebung des Tastkopfes 26 in Y-Richtung auf die Sollpositionen $Y_r$. Aufgrund verschiedener Ursachen, wie beispielsweise einer mangelnden Synchronität der Antriebe 28, 30 oder aufgrund von Schwingungen des Portals 14, liegen die Messpositionen $Y_l$ und $Y_r$ jedoch um die Istdifferenz $\Delta Y$ auseinander. Die tatsächliche Ablage des Tastkopfes 26 von dem hier als Referenz herangezogenen Maßstab 32 beträgt dann $\Delta Y'$, und sie ist von der jeweiligen X-Position des Tastkopfes abhängig 26, wie sich aus der Darstellung in Fig. 2 ergibt.

Der Tastkopf 26 erfährt aufgrund der durch die ungleichen Y-Positionen an den beiden Maßstäben 32, 34 hervorgerufenen Rotation auch eine Abweichung in X-Richtung, die hier als $\Delta X$ bezeichnet ist.

Der Korrekturwert $\Delta Y'$ für die Y-Position ergibt sich mit den bekannten Strahlengesetzen zu

$$\Delta Y' \;=\; \Delta Y \;\cdot\; \frac{X \pm L_x}{B} \;=\; \left( X \pm L_x \right) \cdot \tan\theta,$$

wobei B der Abstand zwischen den beiden Maßstäben 32, 34 ist und wobei $L_x$ die Länge des Tasters (hier nicht dargestellt) in X-Richtung ist.

Der Korrekturwert $\Delta X$ ergibt sich ferner zu

$$\Delta X \;=\; L_Y \cdot \tan\theta,$$

wobei $L_y$ die Länge des Tasters (hier nicht dargestellt) in Y-Richtung ist.

Die in Fig. 2 dargestellten Abweichungen beinhalten einen reproduzierbaren Fehleranteil, vor allem statische und eventuell elastische Führungsfehler, sowie einen nicht-reproduzierbaren Anteil, der bei jeder erneuten Messwertaufnahme variiert. Der reproduzierbare Anteil wird im Folgenden durch den statischen Differenzwert angenähert, der nicht-reproduzierbare Anteil durch den dynamischen Differenzwert.

Fig. 3 zeigt ein Ausführungsbeispiel, wie ein statischer Differenzwert ΔYstat bestimmt werden kann. Dazu wird gemäß Schritt 58 zunächst die bei Koordinatenmessgeräten üblicherweise vorhandene rechnerische Fehlerkorrektur (CAA) ausgeschaltet. Des Weiteren wird gemäß Schritt 60 der zweite Antrieb für das Portal 14 ausgeschaltet, beispielsweise also der Antrieb 30, oder die Kalibrierungsfahrt wird vor dem Anbau des zweiten Antriebs 30 durchgeführt. Mit anderen Worten wird das Portal 14 zur Aufnahme des statischen Differenzwertes ΔYstat vorteilhafterweise mit nur einem der Antriebe 28, 30 verfahren.

Anschließend erfolgt gemäß Schritt 62 eine Kalibrierungsfahrt entlang der Y-Richtung, wobei an definierten Stützstellen Messwerte zur späteren Korrektur von Führungsfehlern aufgenommen werden. Außerdem wird zumindest ein statischer Differenzwert ΔYstat bestimmt, der für die Kalibrierungsfahrt dem Differenzwert ΔY' aus Fig. 2 für eine bestimmte Position des Tastkopfes 26 entspricht. Vorzugsweise werden für eine Vielzahl von Tastkopfpositionen 26 statische Differenzwerte ΔYstat aufgenommen, um die Korrektur der Positionswerte an die jeweilige Tastkopfposition 26 anzupassen.

Schließlich erfolgt im Schritt 64 das Abspeichern aller Korrekturwerte einschließlich des oder der statischen Differenzwerte ΔYstat in dem Speicher 52 des Koordinatenmessgerätes 10.

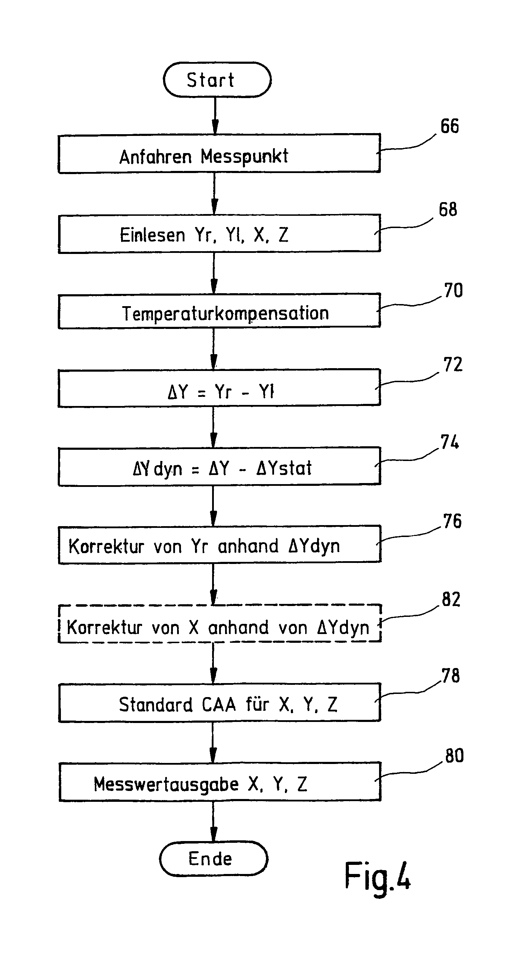

Fig. 4 zeigt ein Ausführungsbeispiel, wie die Raumkoordinaten bestimmt werden können. Gemäß Schritt 66 wird der Messpunkt 42 mit dem Tastkopf 26 angefahren. Nach dem Erreichen des Messpunktes 42 werden die Raumkoordinaten des Tastkopfes 26 mit Hilfe der Maßstäbe 32, 34, 36, 38 eingelesen. Damit erhält man Koordinatenwerte $Y_r$, $Y_l$, X und Z. (Der Einfachheit halber sind Auslenkungen des Taststiftes beim Antasten des Messpunktes 42 hier außer Betracht gelassen. Es versteht sich jedoch, dass derartige Auslenkungen in an sich bekannter Weise bei der Bestimmung der Raumkoordinate berücksichtigt werden können, wenn die Messung mit einem entsprechenden Taststift durchgeführt wird.)

Gemäß Schritt 80 erfolgt anschließend eine Temperaturkompensation, d.h. eine Korrektur der aufgenommenen Messwerte $Y_r$, $Y_l$, X und Z anhand der jeweiligen Umgebungstemperaturen und der Temperaturausdehnungskoeffizienten der Maßstäbe 32 bis 38. Bevorzugt erfolgt die Korrektur der Messwerte in Abhängigkeit von der Temperatur jedes einzelnen Maßstabes 32 bis 38.

Im nächsten Schritt 72 wird die Istdifferenz ΔY zwischen den (temperaturkorrigierten) Y-Positionsmesswerten $Y_l$, $Y_r$ bestimmt. Gemäß Schritt 74 erfolgt dann die Bestimmung eines dynamischen Differenzwertes ΔYdyn, indem der gespeicherte statische Differenzwert ΔYstat von der Istdifferenz ΔY subtrahiert wird.

Im nächsten Schritt 76 erfolgt die Bestimmung der Y-Position des Tastkopfes 26 unter Verwendung des dynamischen Differenzwertes ΔYdyn, indem der vom Maßstab 32 gelieferte Wert $Y_r$ mit dem dynamischen Differenzwert ΔYdyn korrigiert wird (Addition oder Subtraktion, je nach Richtung der Abweichung).

Anschließend erfolgt gemäß Schritt 78 eine an sich bekannte Standardkorrektur aller erfassten Messwerte X, Y, Z unter Verwendung der in der Kalibrierungsfahrt aufgenommenen Korrekturwerte. Dabei wird als Ausgangspunkt für die Y-Position des Tastkopfes 26 allerdings die schon um den dynamischen Differenzwert korrigierte Y-Position des Tastkopfes 26 verwendet. In einem bevorzugten Ausführungsbeispiel erfolgt die StandardKorrektur mit Hilfe des Programms LASERCAL, das von der Anmelderin der vorliegenden Erfindung für diese Zwecke angeboten wird. Schließlich erfolgt im Schritt 80 die Ausgabe der korrigierten Positionswerte X, Y, Z.

In einer bevorzugten Variante dieses Ausführungsbeispiels wird vor der Durchführung der Standardkorrektur im Schritt 78 auch noch die X-Position des Tastkopfes 26 unter Verwendung des dynamischen Differenzwertes bzw. des daraus abgeleiteten dynamischen Korrekturwertes ΔX bestimmt.

Das vorstehend beschriebene Verfahren zur Bestimmung der Raumkoordinaten des Messpunktes 42 kann grundsätzlich bei Koordinatenmessgeräten mit nur einem Antrieb für das Portal 14 durchgeführt werden, vor allem aber auch bei Koordinatenmessgeräten mit zwei getrennten Antrieben für die Portalfüße 16, 18. Im letztgenannten Fall wird der dynamische Differenzwert vorteilhafterweise auch dazu verwendet, um die beiden Portalfüße 16, 18 möglichst synchron anzutreiben. Alternativ hierzu kann eine solche Steuerung der Antriebe auch ohne die zuvor beschriebene Messwertkorrektur erfolgen.

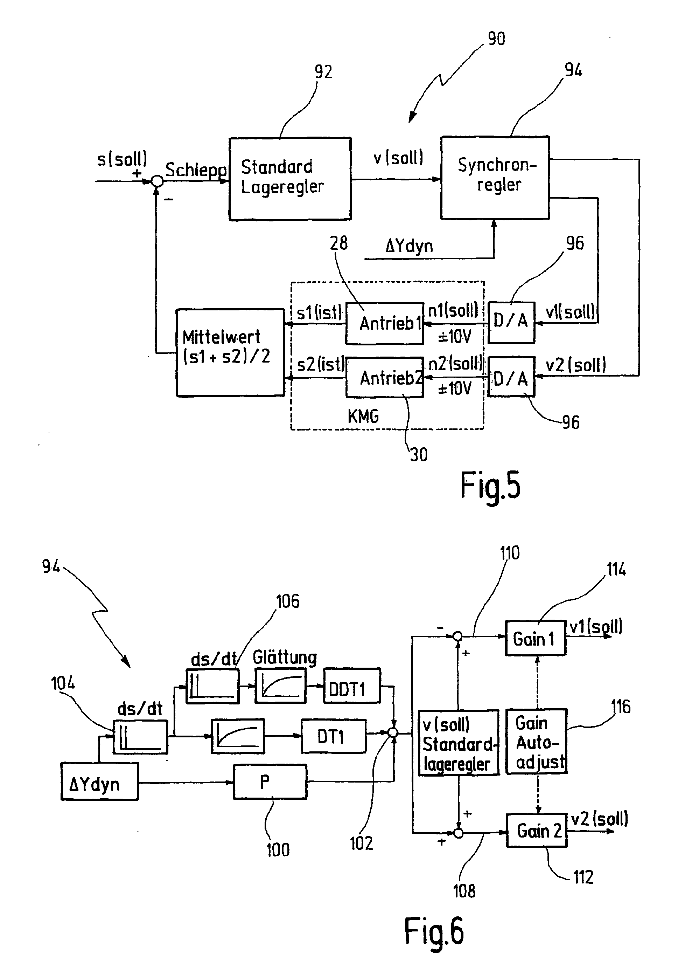

In einem bevorzugten Ausführungsbeispiel erfolgt die Lageregelung mit einem zweistufigen, gemeinsamen Regler 90, wie er in Fig. 5 schematisch dargestellt ist. Der gemeinsame Regler 90 beinhaltet einen Lageregler 92, dem ein Synchronregler 94 nachgeschaltet ist. Der Lageregler 92 ist ein Standard-Lageregler für eine Bewegungsachse, wie er auch bei einem Koordinatenmessgerät mit nur einem Antrieb für die Y-Richtung verwendet werden kann. Er regelt die Lage des Portals 14 hier jedoch nicht entlang der Bewegungsachse des einen Antriebes, sondern entlang einer fiktiven Antriebsachse, die in der Mitte zwischen den beiden Bewegungsachsen der Antriebe 28, 30 liegt. Der jeweilige Positionsistwert wird daher als Mittelwert der Positionen s1 und s2 an den beiden Achsen vorgegeben. Der Positions-

sollwert $s_{(soll)}$ kommt in an sich bekannter Weise von der Steuereinheit 44 des Koordinatenmessgerätes 10.

Der Lageregler 92 erzeugt in Abhängigkeit von der Differenz zwischen der Sollposition $s_{(soll)}$ und der (gemittelten) IstPosition $s_{(ist)}$ einen Vorgabewert für die Geschwindigkeit der beiden Antriebe 28, 30. Der Vorgabewert $v_{(soll)}$ ist dem Synchronregler 94 zugeführt. Außerdem erhält der Synchronregler 94 den dynamischen Differenzwert $\Delta Ydyn$. Aus diesen beiden Größe erzeugt der Synchronregler 94 zwei Geschwindigkeits-Vorgabesignale $v1_{(soll)}$ und $v2_{(soll)}$, die über jeweils einen Digital-Analog-Wandler 96 den beiden Antrieben 28, 30 zugeführt sind. Die Antriebe 28, 30 erhalten damit eine Sollvorgabe für die Drehzahl und stellen eine entsprechende Drehzahl ein. Diese führt in bekannter Weise zu einer Positionsverschiebung der Portalfüße 16, 18, welche anschließend über die Maßstäbe 32, 34 erfasst wird. Aus den erhaltenen Messwerten wird zum einen der dynamische Differenzwert $\Delta Ydyn$ berechnet und gegebenenfalls zur Korrektur der erhaltenen Messwerte verwendet (vgl. Fig. 4 oben). Außerdem wird ein mittlerer Ist-Positionswert bestimmt und als fiktiver Ist-Positionswert dem Standard-Lageregler 92 zugeführt.

Fig. 6 zeigt ein bevorzugtes Ausführungsbeispiel für den Aufbau des Synchronreglers 94. Der Synchronregler 94 erhält den dynamischen Differenzwert $\Delta Ydyn$ als Eingangsgröße. Er führt den dynamischen Differenzwert $\Delta Ydyn$ in einem ersten Zweig über ein Proportionalglied 100 einem Summationspunkt 102 zu. In einem zweiten Zweig differenziert der Synchronregler 94 den erhaltenen dynamischen Differenzwert $\Delta Ydyn$ mit Hilfe eines Differenziergliedes 104, und er führt den differenzierten Ausgangswert ebenfalls dem Summationspunkt 102 zu. In einem dritten Zweig wird der differenzierte Wert ein zweites Mal differenziert (Differenzierglied 106) und dem Summationspunkt 102 zugeführt. Am Summationspunkt 102 erhält man damit einen Stellwert, der sowohl einen Proportionalanteil als auch einen einfach und zweifach nach der Zeit differenzierten Differentialanteil aufweist. Die Anteile können über Faktoren P, DT1 und DDT1 gewichtet werden. Außerdem können die Ausgangswerte der Differenzierglieder 104, 106 noch über ein Glättungsglied geglättet werden. Eine Erhöhung des P-Faktors führt zu kleineren dynamischen Differenzwerten, jedoch zu einer zunehmenden Schwingneigung. Mit Hilfe der Faktoren DT1 und DDT1 kann die Schwingneigung des Synchronreglers reduziert werden.

Die sich am Summationspunkt 102 ergebende Stellgröße wird den Geschwindigkeits-Sollvorgaben des Standard-Lagereglers 92 in einem ersten Zweig 108 additiv überlagert. In einem zweiten Zweig 110 wird die Stellgröße vom Summationspunkt 102 dem Geschwindigkeits-Vorgabewert des Standard-Lagereglers 92 subtraktiv überlagert. Die so erhaltenen Stellgrößen werden jeweils einer Endstufe 112, 114 zugeführt, welche die Geschwindigkeits-Vorgabewerte für die beiden Antriebe 28, 30 erzeugen. Um unterschiedliche Verstärkungsfaktoren der Endstufen 112, 114 zu kompensieren, ist in einem Ausführungsbeispiel ein automatischer Abgleich 116 vorgesehen. Hierbei integriert der Regler eine bei höherer Konstantgeschwindigkeitsfahrt auftretende dynamische Differenz auf die Verstärkungsfaktoren auf. Damit wird der dynamische Differenzwert im Mittel gleich null.

In einem weiteren Ausführungsbeispiel kann der Regler unterschiedliche Verstärkungsfaktoren für positive und negative Fahrt verwalten. Hierdurch lassen sich unterschiedliche Werte abhängig von der Bewegungsrichtung des Portals 14 kompensieren.

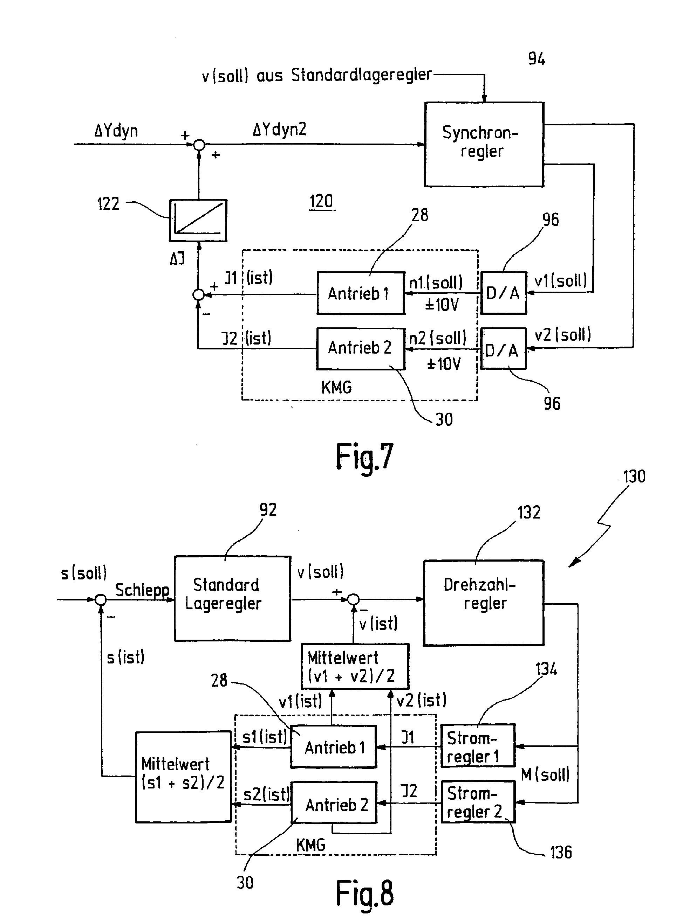

Fig. 7 zeigt eine vorteilhafte Ergänzung des gemeinsamen Reglers 90 aus Fig. 5. Die Ergänzung beinhaltet einen weiteren Regelkreis 120, der jedoch nicht an die Stelle des in Fig. 5 gezeigten Regelkreises tritt, sondern diesen ergänzt. Der weitere Regelkreis 120 misst die Antriebsströme $I1_{(ist)}$ und $I2_{(ist)}$ der beiden Antriebe 28, 30 und bildet daraus einen Differenzstrom $\Delta I$. Der Differenzstrom $\Delta I$ wird über einen Integrierer 122 aufintegriert, und der erhaltene Wert wird zu dem dynamischen Differenzwert $\Delta Ydyn$ addiert. Damit erhält man einen korrigierten dynamische Differenzwert $\Delta Ydyn2$, der anstelle des nichtkorrigierten dynamischen Differenzwertes $\Delta Ydyn$ dem Synchronregler 94 zugeführt ist. Der Synchronregler 94 arbeitet im übrigen genauso, wie anhand Fig. 6 erläutert.

Der Vorteil des gemäß Fig. 7 ergänzten Reglers 90 macht sich bemerkbar, wenn sich im Laufe der Zeit Änderungen an den Messvorrichtungen des Koordinatenmessgerätes 10 einstellen, die zu einem (weiteren) statischen Differenzwertanteil führen. Ohne die Ergänzung gemäß Fig. 7 würde der gemeinsame Regler 90 stetig versuchen, einen solchen weiteren Differenzwertanteil auszugleichen, was jedoch die Führungen des Koordinatenmessgerätes 10 belasten würde. Indem man den korrigierten dynamischen Differenzwert $\Delta Ydyn2$ verwendet, lässt sich dieses unerwünschte Ergebnis vermeiden. Der Integrierer 122 sorgt dafür, dass sich in beiden Antrieben ein Antriebsstrom von in etwa gleicher Höhe einstellt. Mit anderen Worten führt der Regelkreis 120 dazu, dass der Differenzstrom $\Delta I$ im Mittel Null wird.

Besonders vorteilhaft ist es, wenn auch zur Korrektur der aufgenommenen Positionswerte der korrigierte dynamische Differenzwert $\Delta Ydyn2$ im Verfahrensschritt 74 gemäß Fig. 4 verwendet wird. Hierdurch wird eine noch höhere Genauigkeit bei der Bestimmung der Raumkoordinate erreicht.

Besonders vorteilhaft ist es ferner, wenn der Integrierer 122 eine einstellbare Verstärkung $K_I$ besitzt, so dass die Geschwindigkeit des Regelkreises 120 variiert werden kann. Mit einer hohen Integrationsverstärkung $K_I$ lässt sich das Koordinatenmessgerät 10 beim Ausrichten automatisch auf einen zwangsfreien Bewegungsablauf einrichten, indem man das Portal 14 direkt nach der Kalibrierungsfahrt auf kurzen Wegen einige Male vor- und zurückfährt. Der korrigierte dynamische Differenzwert $\Delta Ydyn2$ passt sich dabei automatisch auf einen Wert an, der eine zwangsfreie Bewegung der beiden Portalfüße 16, 18 ermöglicht. Für den eigentlichen Messbetrieb wird die Integrationsverstärkung $K_I$ reduziert oder sogar ausgeschaltet, so dass im wesentlichen oder nur der aufintegrierte Differenzstrom zur Korrektur des dynamischen Differenzwertes verwendet wird. Hierdurch erfolgt eine langsame Adaption an entsprechende Veränderungen des Koordinatenmessgerätes 10.

Fig. 8 zeigt ein weiteres bevorzugtes Ausführungsbeispiel für einen gemeinsamen Regler 130. Gleiche Bezugszeichen bezeichnen dabei dieselben Elemente wie zuvor.

Der Regler 130 beinhaltet ebenfalls einen Standard-Lageregler 92, der einen Positionssollwert $s_{(soll)}$ von der Steuereinheit 44 des Koordinatenmessgerätes 10 erhält. Er erhält ferner einen Positionsistwert $s_{(ist)}$ als Mittelwert der Position s1 und s2 der beiden Portalfüße 16 und 18. Hieraus erzeugt der Standard-Lageregler 92 einen Vorgabewert $v_{(soll)}$, der nun jedoch einem Drehzahlregler 132 zugeführt ist. Der Vorgabewert $v_{(soll)}$ gibt eine Sollgeschwindigkeit der beiden Antriebe 28, 30 vor, die der Standard-Lageregler aus der Positionsvorgabe berechnet. Der Drehzahlregler 132 erhält den Geschwindigkeitssollwert jedoch nicht direkt, sondern reduziert um die mittlere Ist-Geschwindigkeit $v_{(ist)}$, die sich als Mittelwert der Geschwindigkeiten v1 und v2 der beiden Antriebe 28, 30 ergibt. Der Drehzahlregler 132 erzeugt hieraus einen Drehmomentsollwert $M_{(soll)}$, der zwei getrennten Stromreglern 134, 136 zugeführt ist. Die Stromregler 134, 136 bilden hieraus die Antriebsströme für die beiden Antriebe 28, 30. Aufgrund dieser Anordnung ergibt sich für beide Antriebe 28, 30 stets die gleiche Vorschubkraft. Zwangskräfte können in diesem Fall prinzipiell nicht auftreten, wenn die beiden Portalfüße 16, 18 hinreichend starr miteinander gekoppelt sind.

Der gemeinsame Drehzahlregler 132 kann entweder digital oder analog aufgebaut sein. Im Falle eines digitalen Drehzahlreglers wird die mittlere Ist-Geschwindigkeit aus den differenzierten Positionssignalen s1 und s2 der Antriebe 28, 30 gewonnen. Im Falle eines analogen Drehzahlreglers werden die jeweiligen Tachosignale analog gemittelt.

**Patentansprüche**

1. Verfahren zum Bestimmen von zumindest einer Raumkoordinate eines Messpunktes (42) an einem Messobjekt (40), mit den Schritten:

   - Anfahren (66) des Messpunktes (42) mit einem Tastkopf (26), der an einer Verschiebemechanik (14) angeordnet ist, die ein erstes und ein zweites parallel zueinander verfahrbares Auflager (16, 18) aufweist, wobei das erste Auflager (16) mit einem ersten Antrieb (28) und das zweite Auflager (18) mit einem zweiten Antrieb (30) angetrieben werden,
   - Bestimmen (68) einer ersten Verschiebeposition ($Y_l$) des ersten Auflagers (16) und einer zweiten Verschiebeposition ($Y_r$) des zweiten Auflagers (18), und
   - Bestimmen (74-78) der Raumkoordinate des Messpunktes (42) unter Verwendung der ersten und zweiten Verschiebeposition ($Y_l$, $Y_r$),

   wobei die beiden Antriebe (28, 30) mit einem gemeinsamen Regler (90; 130) angesteuert werden, der für jeden Antrieb (28, 30) einen eigenen Sollwert (v1$_{soll}$, v2$_{soll}$; I1, I2) erzeugt,
   eine Istdifferenz ($\Delta Y$) zwischen der ersten und **dadurch gekennzeichnet, dass** zweiten Verschiebeposition ($Y_l$, $Y_r$) bestimmt wird,
   dass ein statischer Differenzwert ($\Delta Ystat$) bereitgestellt wird (64), oder einen reproduzierbaren Differenzanteil zwischen der ersten und der zweiten Verschiebeposition ($Y_l$, $Y_r$) repräsentiert,
   dass der statische Differenzwert ($\Delta Ystat$) von der Istdifferenz ($\Delta Y$) subtrahiert wird (74), um einen dynamischen Differenzwert ($\Delta Ydyn$; $\Delta Ydyn2$) zu erhalten, und
   dass der gemeinsame Regler einen Synchronregler (94) beinhaltet, dem der dynamische Differenzwert ($\Delta Ydyn$; $\Delta Ydyn2$) als Eingangsgröße zugeführt wird (76).

2. Verfahren nach Anspruch 1, **dadurch gekennzeichnet, dass** der gemeinsame Regler (90; 130) einen gemeinsamen Lageregler (92) beinhaltet, der einen für beide Antriebe (28, 30) gemeinsamen Sollwert ($v_{soll}$) erzeugt, sowie zumindest einen weiteren Regler (94; 132), der aus dem gemeinsamen Sollwert ($v_{soll}$) einen individuellen Sollwert (v1$_{soll}$, v2$_{soll}$; I1, I2) für jeden Antrieb (28, 30) erzeugt.

3. Verfahren nach Anspruch 1 oder 2, **dadurch gekennzeichnet, dass** der erste und zweite Antrieb (28, 30) abgeschaltet werden, wenn der dynamische Differenzwert ($\Delta Ydyn$) einen definierten Schwellenwert überschreitet.

4. Verfahren nach einem der Ansprüche 1 bis 3, **dadurch gekennzeichnet, dass** die Raumkoordinate unter Verwendung des dynamischen Differenzwertes ($\Delta Ydyn$) bestimmt wird (76).

5. Verfahren nach Anspruch 4, **dadurch gekennzeichnet, dass** die unter Verwendung des dynamischen Differenzwertes ($\Delta Ydyn$) bestimmte Raumkoordinate anschließend unter Verwendung des statischen Differenzwertes ($\Delta Y$-

stat) korrigiert wird (78).

6. Verfahren nach einem der Ansprüche 1 bis 5, **dadurch gekennzeichnet, dass** der gemeinsame Regler (90) den ersten und den zweiten Antrieb (28, 30) so ansteuert, dass sich in beiden Antrieben (28, 30) ein Antriebsstrom ($I1_{(ist)}$, $I2_{(ist)}$) von in etwa gleicher Höhe einstellt.

7. Verfahren nach einem der Ansprüche 1 bis 6, **dadurch gekennzeichnet, dass** ein Antriebsstrom für den ersten und den zweiten Antrieb (28, 30) auf einem definierten Maximalwert begrenzt wird, wobei der definierte Maximalwert vorzugsweise etwa gleich dem jeweils für eine Beschleunigung der Auflager (16, 18) benötigten Stromwert ist.

8. Verfahren nach einem der Ansprüche 1 bis 7, **dadurch gekennzeichnet, dass** der gemeinsame Regler (130) einen gemeinsamen Drehzahlregler (132) für den ersten und den zweiten Antrieb (28, 30) beinhaltet, dem als Istdrehzahl ein mittlerer Drehzahlwert von dem ersten und zweiten Antrieb (28, 30) zugeführt wird.

9. Verfahren nach Anspruch 8, **dadurch gekennzeichnet, dass** der gemeinsame Regler (130) jeweils einen Stromregler (134, 136) für jeden Antrieb (28, 30) beinhaltet, wobei die Stromregler (134, 136) einen gemeinsamen Sollwert von dem gemeinsamen Drehzahlregler (132) erhalten.

10. Koordinatenmessgerät zum Bestimmen von zumindest einer Raumkoordinate eines Messpunktes (42) an einem Messobjekt (40), mit

   - einem Tastkopf (26) zum Anfahren des Messpunktes (42), wobei der Tastkopf (26) an einer Verschiebemechanik (14) angeordnet ist, die ein erstes (16) und ein zweites (18) parallel zueinander verfahrbares Auflager aufweist,
   - einem ersten Antrieb (28) zum Verfahren des ersten Auflagers (16) und mit einem zweiten Antrieb (30) zum Verfahren des zweiten Auflagers (18),
   - einer ersten und einer zweiten Messeinrichtung (32, 34) zum Bestimmen einer ersten Verschiebeposition ($Y_1$) des ersten Auflagers (16) und einer zweiten Verschiebeposition ($Y_r$) des zweiten Auflagers (18),
   - einer Berechnungseinheit (48, 76, 78, 82) zum Bestimmen der Raumkoordinate des Messpunktes unter Verwendung der ersten und zweiten Verschiebeposition ($Y_1$, $Y_r$), und
   - einen gemeinsamen Regler (90; 130), mit dem die beiden Antriebe (28, 30) gemeinsam ansteuerbar sind, wobei der gemeinsame Regler (90; 130) für jeden Antrieb (28, 30) einen eigenen Sollwert erzeugt, **dadurch gekennzeichnet, dass** eine Istdifferenz ($\Delta Y$) zwischen der ersten und zweiten Verschiebeposition ($Y_1$, $Y_r$) bestimmt wird, dass ein statischer Differenzwert ($\Delta Y stat$) bereitgestellt wird (64), der einen reproduzierbaren Differenzanteil zwischen der ersten und zweiten Verschiebeposition ($Y_1$, $Y_r$) repräsentiert, dass der statische Differenzwert ($\Delta Y stat$) von der Istdifferenz ($\Delta Y$) subtrahiert wird (74) um einen dynamischen Differenzwert ($\Delta dyn$; $\Delta dyn2$) zu erhalten, und dass der gemeinsame Regler einen Synchronregler beinhaltet, dem der dynamische Differenzwert ($\Delta Y dyn$; $\Delta Y dyn2$) als Eingangsgröße zugeführt ist (76).

**Claims**

1. A method for determining at least one space coordinate of a measurement point (42) on an object (40) to be measured, comprising the steps of

   - approaching (66) the measurement point (42) with a probe head (26) arranged on a displacement mechanism (14), which comprises a first and a second support (16, 18) movable parallel to one another, the first support (16) being actuated by a first drive (28) and the second support (18) being actuated by a second drive (30),
   - determining (68) a first displacement position ($Y_l$) of the first support (16) and a second displacement position ($Y_r$) of the second support (18), and
   - determining (74-78) the space coordinate of the measurement point (42) by using the first and second dis-placement positions ($Y_l$, $Y_r$),
   wherein the two drives (28, 30) are actuated by a common regulator (90; 130) which generates a separate setpoint value ($v1_{soll}$, $v2_{soll}$; I1, I2) for each drive (28, 30),
   **characterized in that** an actual difference ($\Delta Y$) between the first and second displacement positions ($Y_l$, $Y_r$) is determined,
   a static difference value ($\Delta Y stat$) is provided (64), which represents a reproducible difference share between the first and second displacement positions ($Y_l$, $Y_r$),

the static difference value ($\Delta$Ystat) is subtracted (74) from the actual difference ($\Delta$Y) in order to obtain a dynamic difference value ($\Delta$Ydyn; $\Delta$Ydyn2), and

the common regulator comprises a synchronous regulator (94) which is supplied (76) with the dynamic difference value ($\Delta$Ydyn; $\Delta$Ydyn2) as an input quantity.

2. The method as claimed in claim 1, **characterized in that** the common regulator (90; 130) comprises a common position regulator (92) which generates a common setpoint value ($v_{soll}$) for both drives (28, 30), and at least one further regulator (94; 132) which generates an individual setpoint value ($v1_{soll}$, $v2_{soll}$; I1, I2) for each drive (28, 30) from the common setpoint value ($v_{soll}$).

3. The method as claimed in one of claims 1 or 2, **characterized in that** the first and second drives (28, 30) are switched off when the dynamic difference value ($\Delta$Ydyn) exceeds a predefined threshold value.

4. The method as claimed in one of claims 1 to 3, **characterized in that** the space coordinate is determined (76) as a function of the dynamic difference value ($\Delta$Ydyn).

5. The method as claimed in claim 4, **characterized in that** the space coordinate determined as a function of the dynamic difference value ($\Delta$Ydyn) is subsequently corrected (78) by using the static difference value ($\Delta$Ystat).

6. The method as claimed in one of claims 1 to 5, **characterized in that** the common regulator (90) actuates the first and second drives (28, 30) so that drive currents ($I1_{(ist)}$, $I2_{(ist)}$) of approximately equal level result in both drives (28, 30).

7. The method as claimed in one of claims 1 to 6, **characterized in that** drive currents for the first and second drives (28, 30) are limited to a predefined maximum value, the predefined maximum value preferably being equal to the current value needed for an acceleration of the respective supports (16, 18).

8. The method as claimed in one of claims 1 to 7, **characterized in that** the common regulator (130) comprises a common rotary speed regulator (132) for the first and second drives (28, 30), to which an average rotary speed value of the first and second drives (28, 30) is supplied as an actual rotary speed.

9. The method as claimed in claim 8, **characterized in that** the common regulator (130) comprises a current regulator (134, 136) for each drive (28, 30), the current regulators (134, 136) receiving a common setpoint value from the common rotary speed regulator (132).

10. A coordinate measuring machine for determining at least one space coordinate of a measurement point (42) on an object (40) to be measured, comprising

- a probe head (26) for approaching the measurement point (42), the probe head (26) being arranged on a displacement mechanism (14) which comprises a first (16) and a second support (18) movable parallel to one another,
- a first drive (28) for moving the first support (16) and a second drive (30) for moving the second support (18),
- a first and a second measuring instrument (32, 34) for determining a first displacement position ($Y_l$) of the first support (16) and for determining a second displacement position ($Y_r$) of the second support (18),
- a calculation unit (48, 76, 78, 82) for determining the space coordinate of the measurement point by using the first and second displacement positions ($Y_l$, $Y_r$), and
- a common regulator (90; 130) configured to actuate the two drives (28, 30) together, wherein the common regulator (90; 130) generates a separate setpoint value for each drive (28, 30), **characterized in that** an actual difference ($\Delta$Y) between the first and second displacement positions ($Y_l$, $Y_r$) is determined, a static difference value ($\Delta$Ystat) is provided (64), which represents a reproducible static difference share between the first and second displacement positions ($Y_l$, $Y_r$), the static difference value ($\Delta$Ystat) is subtracted (74) from the actual difference ($\Delta$Y) in order to obtain a dynamic difference value ($\Delta$Ydyn; $\Delta$Ydyn2), and the common regulator comprises a synchronous regulator which is supplied (76) with the dynamic difference value ($\Delta$Ydyn; $\Delta$Ydyn2) as an input quantity.

**Revendications**

1. Procédé pour déterminer au moins une coordonnée spatiale d'un point de mesure (42) sur un objet à mesurer (40), comprenant les étapes suivantes:

- approche (66) du point de mesure (42) avec une tête de palpage (26) qui est disposée sur un mécanisme de translation (14), lequel présente un premier et un deuxième coussinet (16, 18) pouvant se déplacer parallèlement l'un à l'autre, le premier coussinet (16) étant entraîné par un premier mécanisme d'entraînement (28) et le deuxième coussinet (18) par un deuxième mécanisme d'entraînement (30),
- détermination (68) d'une première position de translation ($Y_l$) du premier coussinet (16) et d'une deuxième position de translation ($Y_r$) du deuxième coussinet (18) et
- détermination (74-78) de la coordonnée spatiale du point de mesure (42) en utilisant la première et la deuxième position de translation ($Y_l$, $Y_r$),

les deux mécanismes d'entraînement (28, 30) étant commandés avec un régulateur commun (90 ; 130) qui génère une valeur de consigne propre ($v1_{soll}$, $v2_{soll}$ ; I1, 12) pour chaque mécanisme d'entraînement (28, 30), **caractérisé en ce qu'**une différence réelle ($\Delta Y$) entre la première et la deuxième position de translation ($Y_l$, $Y_r$) est déterminée,

qu'une valeur différentielle statique ($\Delta Ystat$) est fournie (64), laquelle représente une part différentielle reproductible entre la première et la deuxième position de translation ($Y_l$, $Y_r$), que la valeur différentielle statique ($\Delta Ystat$) est soustraite (74) de la différence réelle ($\Delta Y$) afin d'obtenir une valeur différentielle dynamique ($\Delta Ydyn$ ; $\Delta Ydyn2$) et

que le régulateur commun contient un régulateur synchrone (94) auquel la valeur différentielle dynamique ($\Delta Ydyn$ ; $\Delta Ydyn2$) est acheminée (76) en tant que grandeur d'entrée.

2. Procédé selon la revendication 1, **caractérisé en ce que** le régulateur commun (90 ; 130) contient un régulateur de position commun (92) qui génère pour les deux mécanismes d'entraînement (28, 30) une valeur de consigne commune ($v_{soll}$) ainsi qu'au moins un régulateur supplémentaire (94 ; 132) qui, à partir de la valeur de consigne commune ($v_{soll}$), génère une valeur de consigne individuelle ($v1_{soll}$, $v2_{soll}$ ; I1, I2) pour chaque mécanisme d'entraînement (28, 30).

3. Procédé selon la revendication 1 ou 2, **caractérisé en ce que** le premier et le deuxième mécanisme d'entraînement (28, 30) sont mis hors circuit lorsque la valeur différentielle dynamique ($\Delta Ydyn$) dépasse une valeur de seuil donnée.

4. Procédé selon l'une des revendications 1 à 3, **caractérisé en ce que** la coordonnée spatiale est déterminée (76) en utilisant la valeur différentielle dynamique ($\Delta Ydyn$).

5. Procédé selon la revendication 4, **caractérisé en ce que** la coordonnée spatiale déterminée en utilisant la valeur différentielle dynamique ($\Delta Ydyn$) est ensuite corrigée (78) en utilisant la valeur différentielle statique ($\Delta Ystat$).

6. Procédé selon l'une des revendications 1 à 5, **caractérisé en ce que** le régulateur commun (90) commande le premier et le deuxième mécanisme d'entraînement (28, 30) de telle sorte qu'un courant d'entraînement ($I1_{(ist)}$, $I2_{(ist)}$) ayant approximativement la même intensité s'établit dans les deux mécanismes d'entraînement (28, 30).

7. Procédé selon l'une des revendications 1 à 6, **caractérisé en ce qu'**un courant d'entraînement pour le premier et le deuxième mécanisme d'entraînement (28, 30) est limité à une valeur maximale donnée, la valeur maximale donnée étant de préférence approximativement égale à la valeur du courant à chaque fois nécessaire pour une accélération des coussinets (16, 18).

8. Procédé selon l'une des revendications 1 à 7, **caractérisé en ce que** le régulateur commun (130) contient un régulateur de vitesse de rotation commun (132) pour le premier et le deuxième mécanisme d'entraînement (28, 30), auquel est acheminée comme vitesse de rotation réelle une valeur de vitesse de rotation moyenne du premier et du deuxième mécanisme d'entraînement (28, 30).

9. Procédé selon la revendication 8, **caractérisé en ce que** le régulateur commun (130) contient respectivement un régulateur de courant (134, 136) pour chaque mécanisme d'entraînement (28, 30), les régulateurs de courant (134, 136) obtenant une valeur de consigne commune de la part du régulateur de vitesse de rotation commun (132).

10. Appareil de mesure de coordonnées pour déterminer au moins une coordonnée spatiale d'un point de mesure (42) sur un objet à mesurer (40), comprenant

- une tête de palpage (26) pour s'approcher du point de mesure (42), 1a tête de palpage (26) étant disposée sur un mécanisme de translation (14), lequel présente un premier (16) et un deuxième (18) coussinet pouvant se déplacer parallèlement l'un à l'autre,

- un premier mécanisme d'entraînement (28) pour déplacer le premier coussinet (16) et un deuxième mécanisme d'entraînement (30) pour déplacer le deuxième coussinet (18),

- un premier et un deuxième dispositif de mesure (32, 34) pour déterminer une première position de translation ($Y_l$) du premier coussinet (16) et une deuxième position de translation ($Y_r$) du deuxième coussinet (18),

- une unité de calcul (48, 76, 78, 82) pour déterminer la coordonnée spatiale du point de mesure en utilisant la première et la deuxième position de translation ($Y_l$, $Y_r$), et

- un régulateur commun (90 ; 130) avec lequel les deux mécanismes d'entraînement (28, 30) peuvent être commandés en commun, le régulateur commun (90 ; 130) générant une valeur de consigne propre pour chaque mécanisme d'entraînement (28, 30),

**caractérisé en ce qu'**une différence réelle ($\Delta Y$) entre la première et la deuxième position de translation ($Y_1$, $Y_r$) est déterminée,

qu'une valeur différentielle statique ($\Delta Y stat$) est fournie (64), laquelle représente une part différentielle reproductible entre la première et la deuxième position de translation ($Y_1$, $Y_r$),

que la valeur différentielle statique ($\Delta Y stat$) est soustraite (74) de la différence réelle ($\Delta Y$) afin d'obtenir une valeur différentielle dynamique ($\Delta Y dyn$ ; $\Delta Y dyn2$) et que le régulateur commun contient un régulateur synchrone auquel la valeur différentielle dynamique ($\Delta Y dyn$ ; $\Delta Y dyn2$) est acheminée (76) en tant que grandeur d'entrée.

Fig.1

Fig.2

Start

Ausschalten CAA — 58

Ausschalten Antrieb 2 — 60

Kalibrierungsfahrt zur Aufnahme von Führungsfehlern und zur Aufnahme von ΔYstat — 62

Abspeichern Korrekturwerte einschließlich ΔYstat — 64

Ende  Fig.3

Fig.4

Fig.5

Fig.6

v(soll) aus Standardlageregler

94

ΔYdyn    +    ΔYdyn2 → | Synchron- regler |

122 → [ / ]

ΔJ

120

28

96

J1 (ist)

| Antrieb 1 | n1 (soll) ±10V | | D/A | v1 (soll)

J2 (ist)

| Antrieb 2 | n2 (soll) ±10V | | D/A | v2 (soll)

KMG

30

96

**Fig.7**

130

92

132

s (soll) → Schlepp → | Standard Lageregler | → v (soll)   +   − → | Drehzahl- regler |

s (ist)

v (ist)

| Mittelwert (v1 + v2)/2 |

28

v1 (ist)    v2 (ist)

134

| Antrieb 1 | s1 (ist) | J1 | | Strom- regler 1 |

M (soll)

| Antrieb 2 | s2 (ist) | J2 | | Strom- regler 2 |

| Mittelwert (s1 + s2)/2 |

KMG

30

136

**Fig.8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6829838 B1
- US 6025689 A
- EP 0241883 A2
- US 6246203 B1